# EUROPÄISCHE PATENTSCHRIFT

(11) **EP 1 837 369 B1**
(45) Veröffentlichungstag und Bekanntmachung des Hinweises auf die Patenterteilung: **09.09.2009**
(21) Anmeldenummer: 06111699.2
(22) Anmeldetag: 24.03.2006
(51) Int. Cl.: C08L 9/00, C08L 9/06, C08L 7/00, C08K 3/04, C08K 3/36, C08K 5/01, B60C 1/00, C08K 5/00

(54) **Kautschukmischung und Reifen**
Rubber composition and tire
Composition de caoutchouc et pneumatique

(43) Veröffentlichungstag der Anmeldung: 26.09.2007
(73) Patentinhaber: Continental Aktiengesellschaft, 30165 Hannover (DE)
(72) Erfinder: Strübel, Christian, Dr., 30559, Hannover (DE); Söhnen, Dietmar, Dr., 31867, Lauenau (DE); Jäckel, Janna, 30165, Hannover (DE); Magalhaes Rischbieter, Ana Maria, 30165, Hannover (DE); Craig, Aileen, Dr., 30900, Wedemark (DE)

(56) Entgegenhaltungen:
- EP-A- 0 677 548
- EP-A- 1 589 068
- EP-A1- 0 708 137
- EP-A1- 0 748 841
- EP-A1- 1 179 560
- EP-A1- 1 270 657
- EP-A1- 1 529 806
- US-A- 4 644 988

## Beschreibung

Die Erfindung betrifft eine schwefelvernetzbare Kautschukmischung ohne aromatische Prozessöle, insbesondere für den Laufstreifen von Fahrzeugluftreifen, enthaltend zumindest einen Dienkautschuk, Ruß, Mineralölweichmacher, Kieselsäure und zumindest ein Silan-Kupplungsagens. Die Erfindung betrifft ferner einen Fahrzeugluftreifen mit einem Laufstreifen, der zumindest zum Teil aus einer solchen, mit Schwefel vulkanisierten Kautschukmischung besteht.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt. An Laufstreifenmischungen für PKW- und Van-Reifen werden beispielsweise höchste Anforderungen hinsichtlich des Bremsens, des Abriebwiderstands, des Rollwiderstands und des Handlings, insbesondere auf trockener Fahrbahn, gestellt. Als Maß für das Handlingverhalten auf trockener Fahrbahn dient die dynamische Steifigkeit, wobei eine Erhöhung der dynamischen Steifigkeit bzw. des dynamischen Moduls E' mit einer Verbesserung des Handlingverhaltens korreliert werden kann.

Ein entscheidender Schritt zur Verbesserung der Reifeneigenschaften wurde durch den Einsatz von Kieselsäuren in Kombination mit Silan-Kupplungsagenzien in entsprechend optimierten Mischungszusammensetzungen erzielt. So konnte auf diese Weise der Rollwiderstand von Reifen verringert und die Nassrutsch- und Wintereigenschaften verbessert werden.

Die in der Reifenindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.

In der Literatur werden für den Einsatz in Reifenkautschukmischungen Kieselsäuren mit unterschiedlichen Stickstoff- und CTAB-Oberflächen vorgeschlagen. Die beispielsweise in der EP 0 899 297 B1, der WO 02/072688 und der EP 1 270 657 A1 für Kieselsäuren für den Einsatz in Laufstreifenmischungen angegebenen Stickstoff-Oberflächen reichen von 35 bis 600 m²/g, die dort angegebenen CTAB-Oberflächen von 30 bis 450 m²/g. In der EP 1 186 629 B 1 werden mit Schwefel vulkanisierbare Kautschukmischungen offenbart, die Kieselsäure mit einer Stickstoff-Oberfläche von 185 bis 250 m²/g und einer CTAB-Oberfläche von 180 bis 240 m²/g enthalten. Auch in der EP 1 529 806 A1, der EP 1 179 560 A1, der EP 0 708 137 A1, der EP 0 748 841 A1 und der EP 0 677 548 A1 werden Reifenkautschukmischungen beschrieben, die Kieselsäure enthalten. Typischerweise werden Kieselsäuren mit einer Stickstoff-Oberfläche zwischen 120 und 240 m²/g und einer CTAB-Oberfläche zwischen 120 und 230 m²/g eingesetzt. Üblicherweise führt eine Erhöhung der Oberfläche eines Kieselsäuretyps in einer Laufstreifenmischung zu einer Verbesserung des Abriebverhaltens bei gleichzeitige Verschlechterung des Rollwiderstands.
Ein anderer wichtiger Füllstofftyp für Reifenkautschukmischungen ist Ruß, der z. B. in Form von Hochstrukturruß gemäß US 4,644,988 oder Aktivruß gemäß EP 1 589 068 A1 eingesetzt werden kann.

Beispielhaft seien an dieser Stelle die Stickstoff- und CTAB-Oberflächen einiger für Reifenkautschukmischungen gängiger, kommerziell erhältlicher Kieselsäure-Typen genannt:

| Hersteller | Produkt | Stickstoff-Oberfläche | CTAB-Oberfläche |
|---|---|---|---|
| Degussa AG | Ultrasil^{®}VN2 | 125 | 125 |
| Degussa AG | Ultrasil^{®}VN3 | 175 | 160 |
| Rhodia | Zeosil^{®}1165 MP | 160 | 157 |
| PPG Industries Inc. | HiSil 210 | 135 | 130 |
| PPG Industries Inc | HiSil 255 | 185 | 160 |
| PPG Industries Inc | HiSil 2000 | 235 | 230 |

Der vorliegenden Erfindung liegt die Aufgabe zugrunde, Kautschukmischungen für die Laufstreifen von Fahrzeugluftreifen bereitzustellen, deren Vulkanisate sich durch eine erhöhte dynamische Steifigkeit auszeichnen und die beim Reifen ein verbessertes Abriebverhalten bei geringem Rollwiderstand und ein gutes Handlingverhalten auf trockener Fahrbahn bewirken.

Gelöst wird diese Aufgabe erfindungsgemäß dadurch, dass die Kautschukmischung frei von aromatischen Prozessölen ist und
- zumindest einen Dienkautschuk,
- 5 *-* 50 phr (Gewichtsteile, bezogen auf 100 Gewichtsteile der gesamten Kautschuke in der Mischung) zumindest eines Rußes mit einer Iodadsorptionszahl von 100 - 180 g/kg und einer DBP-Zahl von 100 - 150 cm³/100 g,
- 5 - 80 phr zumindest eines Mineralölweichmachers, der einen Gehalt an polycyclischen aromatischen Verbindungen, bestimmt mit dem DMSO-Extrakt nach der IP 346 Methode, von weniger als 3 Gew.-%, bezogen auf das Gesamtgewicht des Mineralölweichmachers, aufweist,
- 20 - 100 phr zumindest einer Kieselsäure mit einer Stickstoff-Oberfläche von 180 - 210 m²/g und einer CTAB-Oberfläche von 180 - 210 m²/g und
- zumindest ein Silan-Kupplungsagens.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Unter aromatischen Prozessölen versteht man Mineralölweichmacher, die gemäß ASTM D 2140 über 25 %, vorzugsweise über 35 %, aromatische Bestandteile (C_{A}), weniger als 45 % naphthenische (C_{N}) und weniger als 45 % paraffinische (C_{P}) Bestandteile enthalten. Die Viskositäts-Dichte-Konstante gemäß ASTM D 2140 (VDK) von aromatischen Prozessölen ist größer als 0,9. Ferner werden die aromatischen Prozessöle nach ASTM D 2226 klassifiziert in Öltyp 101 und 102.

Die polycyclischen aromatischen Verbindungen umfassen aromatische Kohlenwasserstoffe, die mehr als drei kondensierte aromatische Ringe enthalten, und die davon abgeleiteten heterocyclischen Verbindungen mit Schwefel- und/oder Stickstoff. Die Ringe können mit kurzen Alkyl- oder Cycloalkylgruppen substituiert sein.

Überraschenderweise wurde gefunden, dass durch die spezielle Kombination von 20 bis 80 phr einer über Silan-Kupplungsangenzien angebundenen Kieselsäure, die spezielle und eng beieinander liegende Stickstoff- und CTAB-Oberflächen aufweist, mit 5 bis 50 phr eines so genannten Aktivrußes, aufweisend eine hohe Struktur (hohe DBP-Zahl) und eine große Oberfläche (hohe Jodadsorptionszahl), und mit 5 - 80 phr zumindest eines Mineralölweichmachers, aufweisend einen geringen Gehalt an polycyclischen Verbindungen, eine signifikante Erhöhung des dynamischen Moduls E' der Vulkanisate erbringt. Gleichzeitig wird der Abrieb deutlich verringert und damit verbessert und der Rollwiderstand bleibt auf hohem Niveau.

Die schwefelvernetzbare Kautschukmischung enthält zumindest einen Dienkautschuk. Zu den Dienkautschuken zählen alle Kautschuke mit einer ungesättigten Kohlenstoffkette, die sich zumindest teilweise von konjugierten Dienen ableiten. Zu diesen Dienkautschuken zählen beispielsweise Naturkautschuk (NR), synthetisches Polyisopren (IR), Polybutadien (BR) und Styrol-Butadien-Copolymer (SBR). Diese Dienelastomere lassen sich gut zu der Kautschukmischung verarbeiten und ergeben in den vulkanisierten Reifen gute Reifeneigenschaften.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren; der cis-1,4-Anteil im Naturkautschuk ist größer 99 Gew.-%.

Enthält die Kautschukmischung als Dienkautschuk Polybutadien (BR), kann es sich dabei sowohl um cis-1,4- als auch um Vinyl-Polybutadien (40-90 Gew.-% Vinyl-Anteil) handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Bei dem Styrol-Butadien-Copolymer kann es sich um lösungspolymerisiertes Styrol-Butadien-Copolymer (S-SBR) mit einem Styrol-Anteil, bezogen auf das Polymer, von ca. 10 bis 45 Gew.-% und einem Vinyl-Anteil (Gehalt an 1,2-gebundenem Butadien, bezogen auf das gesamte Polymer) von 10 bis 80 Gew.-% handeln, welches zum Beispiel unter Verwendung von Lithiumalkylen in organischem Lösungsmittel hergestellt werden kann. Die S-SBR können auch gekoppelt und endgruppenmodifiziert sein. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Gemäß einer vorteilhaften Weiterbildung der Erfindung enthält die erfindungsgemäße Kautschukmischung 30 bis 90 phr zumindest eines lösungspolymerisierten Styrol-Butadien-Copolymers (S-SBR) mit einem Vinyl-Anteil von mehr als 35 Gew.-% und 10 bis 70 phr zumindest eines weiteren Dienkautschukes. Besonderes bevorzugt ist, wenn das lösungspolymerisierte Styrol-Butadien-Copolymer einen Vinyl-Anteil von 35 bis 80 Gew.-% und einen Styrol-Anteil von 15 bis 40 Gew.-% aufweist. Die weiteren Dienkautschuke werden bevorzugt ausgewählt aus der Gruppe bestehend aus Naturkautschuk, synthetischem Polyisopren, Polybutadien und Styrol-Butadien-Copolymeren.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk oder Ethylen-Propylen-Dien-Kautschuk (EPDM), enthalten.

Die erfindungsgemäße Kautschukmischung enthält 5 - 50 phr des oder der Aktivruße(s). Der Aktivruß weist eine Iodadsorptionszahl (gemäß ASTM D 1510) von 100 - 180 g/kg, vorzugsweise von 110 - 130 g/kg, und einer DBP-Zahl (gemäß ASTM D 2414) von 100 - 150 cm³/100 g, vorzugsweise von 120 - 140 cm³/100 g auf. Es können beispielsweise Ruße der Typen N-242 und N-121 oder HV3396 verwendet werden.

In der erfindungsmäßen Mischung werden 5 - 80 phr, vorzugsweise 10 - 50 phr, eines Mineralölweichmachers oder Kombinationen aus mehreren Mineralölweichmachern eingesetzt. Diese Menge an Weichmacher gewährleistet eine optimale Verarbeitbarkeit bei guten dynamischen Eigenschaften und guter Kälteflexibilität. Als Mineralölweichmacher, deren Gehalte an polycyclischen aromatischen Verbindungen (PCA-Gehalt), bestimmt mit dem DMSO-Extrakt nach der IP 346 Methode, weniger als 3 Gew.-%, bezogen auf das Gesamtgewicht des Mineralölweichmachers, betragen, können grundsätzlich alle dem Fachmann bekannten Mineralölweichmacher benutzt werden, die diese Werte erfüllen. Derartige Mineralölweichmacher sind z. B. MES (mild extraction solvate), das durch Solvent-Extraktion von Schweröldestillaten oder durch Behandlung von Schweröldestillaten mit Wasserstoff in Anwesenheit eines Katalysators (Hydrierung) erhalten wird, oder TDAE (treated destillate aromatic extract). Hinsichtlich dieser Mineralölweichmacher sei in diesem Zusammenhang exemplarisch auf V. Null, "Safe Process Oils for Tires with Low Environmental Impact", Kautschuk Gummi Kunststoffe, 12/1999, S. 799-805 verwiesen. Die Verwendung derartiger Mineralölweichmacher in Kautschukmischungen ist z. B. auch aus der EP 0 940 462 A2 bekannt. Wird ein Mineralölweichmacher mit einer Glasübergangstemperatur von weniger als - 45 °C verwendet, kann man die Kälteflexibilität bei tieferen Temperaturen weiter verbessern.

Die Kautschukmischung enthält 20 - 100 phr, bevorzugt 50 - 90 phr zumindest einer Kieselsäure mit einer Stickstoff-Oberfläche von 180 - 210 m²/g (gemäß DIN 66131 und DIN 66132) und einer CTAB-Oberfläche von 180 - 210 m²/g (gemäß ASTM D 3765). Es können auch mehrere Kieselsäuren mit den genannten Oberflächen als Gemisch eingesetzt werden.

Als weitere Füllstoffe kann die Kautschukmischung neben dem Aktivruß und der speziellen Kieselsäure auch noch andere Ruße, andere Kieselsäuren, Aluminiumhydroxid, Schichtsilikate, Kreide, Stärke, Magnesiumoxid, Titandioxid, Kautschukgele, Kurzfasern usw. in beliebigen Kombinationen enthalten.

Zur Verbesserung der Verarbeitbarkeit und zur Anbindung der Kieselsäure und anderer ggf. vorhandener polarer Füllstoffe an den Dienkautschuk wird zumindest ein Silan-Kupplungsagens in der Kautschukmischung eingesetzt. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sx- (mit x = 2-8). So können als Silan-Kupplungsagenzien z. B. 3-Mercaptopropyltriethoxysilan, 3-Thiocyanato-propyltrimethoxysilan oder 3 ,3 ' -Bis(triethoxysilylpropyl)polysulfide mit 2 bis 8 Schwefelatomen, wie z. B. 3,3 '-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden.

Die Silan-Kupplungsagenzien werden in Mengen von 0,2 bis 30 Gewichtsteilen, vorzugsweise 1 bis 15 Gewichtsteilen, bezogen auf 100 Gewichtsteile Füllstoff, insbesondere Kieselsäure, eingesetzt, da dann eine optimale Anbindung des Füllstoffes an den oder die Kautschuk(e) erfolgen kann.

Neben den bereits genannten Inhaltsstoffen kann die Kautschukmischung weitere in der Kautschukindustrie übliche Zusatzstoffe wie z. B. weitere Weichmacher, Alterungsschutzmittel, Aktivatoren, wie z. B. Zinkoxid und Fettsäuren (z. B. Stearinsäure), Wachse und Mastikationshilfsmittel in üblichen Gewichtsteilen enthalten.

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide. Die Beschleuniger können auch in Kombination miteinander eingesetzt werden, wobei sich synergistische Effekte ergeben können.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet, z. B. durch einen Extrusionsvorgang, und in die entsprechende Form gebracht. Bevorzugt wird die Mischung in die Form eines Laufstreifens gebracht. Ein so erzeugter Laufstreifenmischungsrohling wird bei der Herstellung des Fahrzeugluftreifenrohlings wie bekannt aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden. Es ist bei den Reifen unerheblich, ob der gesamte Laufstreifen aus einer einzigen Mischung hergestellt worden ist oder z. B. einen Cap- und Base-Aufbau aufweist, denn wichtig ist, dass zumindest die mit der Fahrbahn in Berührung kommende Fläche aus der erfindungsgemäßen Kautschukmischung hergestellt worden ist.

Die Erfindung soll nun anhand von Vergleichs- und Ausführungsbeispielen, die in der Tabelle 1 zusammengefasst sind, näher erläutert werden.

Bei sämtlichen in der Tabelle 1 enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V gekennzeichnet, die erfindungsgemäßen Mischungen sind mit E gekennzeichnet. Die Mischungen wurden härtegleich eingestellt.

Mit den Mischungen gemäß Tabelle 1 wurden Reifen hergestellt, deren Laufstreifen aus den angegebenen Mischungen bestehen. Mit diesen Reifen wurden vergleichende Versuche bezüglich des Rollwiderstandes, des Abriebs und des ABS-Nassbremsens durchgeführt. Die entsprechenden Eigenschaften von Reifen mit einem Laufstreifen aus einer herkömmlichen Mischung gemäß V(1) wurde gleich 100 gesetzt, Werte größer als 100 bedeuten eine Verbesserung der entsprechenden Eigenschaft (Wertung, rating). Ferner wurde der dynamische Modul E' (dynamische Steifigkeit) in Abhängigkeit von der Dehnung (0,1 -12 %) bei konstanter Temperatur für die Mischungen im Labor ermittelt. Dazu erfolgte die Mischungsherstellung unter üblichen Bedingungen in zwei Stufen in einem Labortangentialmischer. Aus den Mischungen wurden Prüfkörper durch optimale Vulkanisation unter Druck bei 160 °C hergestellt und mit diesen Prüfkörpern der dynamische Modul E', der auf das Handlingverhalten auf trockener Fahrbahn schließen lässt, ermittelt. Auch hier wurde die Mischung gemäß V(1) gleich 100 gesetzt.

**Tabelle 1**

| Bestandteile | Einheit | 1(V) | 2(V) | 3(V) | 4(V) | 5(E) |
|---|---|---|---|---|---|---|
| Naturkautschuk | phr | 30 | 30 | 30 | 30 | 30 |
| High-vinyl-S-SBR^{a} | phr | 70 | 70 | 70 | 70 | 70 |
| Ruß N-339 | phr | 15 | 15 | - | 15 | - |
| Ruß N-121 | phr | - | - | 15 | - | 15 |
| Kieselsäure A^{b} | phr | 85 | 85 | 85 | - | - |
| Kieselsäure B^{c} | phr | - | - | - | 85 | 85 |
| aromatisches Prozessöl | phr | 20 | - | 22 | 25 | - |
| TDAE^{d} | phr | - | 17 | - | - | 23 |
| Silan-Kupplungsagens^{e} | phr | 8 | 8 | 8 | 8 | 8 |
| Alterungsschutzmittel | phr | 4 | 4 | 4 | 4 | 4 |
| Zinkoxid | phr | 2 | 2 | 2 | 2 | 2 |
| Stearinsäure | phr | 1 | 1 | 1 | 1 | 1 |
| Beschleuniger | phr | 4 | 4 | 4 | 4 | 4 |
| Schwefel | phr | 1,7 | 1,7 | 1,7 | 1,7 | 1,7 |
| Reifeneigenschaft | | | | | | |
| Rollwiderstand | | 100 | 100 | 99 | 98 | 100 |
| Abrieb | | 100 | 102 | 102 | 108 | 115 |
| ABS-Nassbremsen | | 100 | 98 | 100 | 100 | 103 |
| Dynamischer Modul E' | | 100 | 97 | 100 | 100 | 110 |

| | | | | | | |
|---|---|---|---|---|---|---|
| ^{a}NS 116 R, Nippon Zeon, Japan, Vinylgehalt: 63 Gew.-%, Styrolgehalt: 21 Gew.-% ^{b} VN3, Degussa AG, Deutschland, Stickstoff-Oberfläche: 175 m²/g, CTAB-Oberfläche: 160 m²/g ^{c} Kieselsäure mit einer Stickstoff-Oberfläche: 190 m²/g, CTAB-Oberfläche: 190 m²/g, Aggregatgröße 33 nm ^{d} treated destillate aromatic extract ^{e} Silquest^{®} A 1589, General Electric Speciality, USA | | | | | | |

Aus den Daten der Tabelle wird ersichtlich, dass nur die spezielle Kombination von speziellem Ruß mit Weichmachern mit geringem Gehalt an polycylischen aromatischen Verbindungen und mit spezieller Kieselsäure zu einer deutlichen und überraschenden Verbesserung der dynamischen Steifigkeit führt (s. 5(E)), die aus den Einzelmaßnahmen nicht zu erwarten war. Bei Reifen mit einer dementsprechenden Lauffläche resultiert dies in einem besseren Handlingverhalten auf trockener Fahrbahn. Gleichzeitig wird das Abriebverhalten stark verbessert und der Rollwiderstand bricht, entgegen dem vom Fachmann Erwarteten und wie es z. B. 1(V) und 4(V) zeigen, beim Übergang zu einer Kieselsäure mit größerer Oberfläche, nicht ein.
Zusätzlich ist auch das Nassbremsen der Mischung 5(E) verbessert.

## Patentansprüche

1. Schwefelvernetzbare Kautschukmischung ohne aromatische Prozessöle, insbesondere für den Laufstreifen von Fahrzeugluftreifen, enthaltend
- zumindest einen Dienkautschuk,
- 5 - 50 phr (Gewichtsteile, bezogen auf 100 Gewichtsteile der gesamten Kautschuke in der Mischung) zumindest eines Rußes mit einer Iodadsorptionszahl von 100 - 180 g/kg und einer DBP-Zahl von 100 - 150 cm³/100 g,
- 5 - 80 phr zumindest eines Mineralölweichmachers, der einen Gehalt an polycyclischen aromatischen Verbindungen, bestimmt mit dem DMSO-Extrakt nach der IP 346 Methode, von weniger als 3 Gew.-%, bezogen auf das Gesamtgewicht des Mineralölweichmachers, aufweist,
- 20 - 100 phr zumindest einer Kieselsäure mit einer Stickstoff-Oberfläche von 180
- 210 m²/g und einer CTAB-Oberfläche von 180 - 210 m²/g und
- zumindest ein Silan-Kupplungsagens.

2. Kautschukmischung nach Anspruch 1, **dadurch gekennzeichnet, dass** sie 30 - 90 phr zumindest eines lösungspolymerisierten Styrol-Butadien-Copolymers mit einem Vinyl-Anteil von mehr als 35 Gew.-% und 10 - 70 phr zumindest eines weiteren Dienkautschukes enthält.

3. Kautschukmischung nach Anspruch 2, **dadurch gekennzeichnet, dass** das lösungspolymerisierte Styrol-Butadien-Copolymer einen Vinyl-Anteil von 35 - 80 Gew.-% und einen Styrol-Anteil von 15 - 40 Gew.-% aufweist.

4. Kautschukmischung nach Anspruch 2 oder 3, **dadurch gekennzeichnet, dass** der weitere Dienkautschuk ausgewählt ist aus der Gruppe, bestehend aus Naturkautschuk, synthetischem Polyisopren, Polybutadien und Styrol-Butadien-Copolymeren.

5. Kautschukmischung nach zumindest einem der vorhergehenden Ansprüche, **dadurch gekennzeichnet, dass** der Ruß eine Iodadsorptionszahl von 110 - 130 g/kg und einer DBP-Zahl von 120 - 140 cm³/100 g aufweist

6. Kautschukmischung nach zumindest einem der vorhergehenden Ansprüche, **dadurch gekennzeichnet, dass** sie 10 - 50 phr des Mineralölweichmachers enthält.

7. Kautschukmischung nach zumindest einem der vorhergehenden Ansprüche, **dadurch gekennzeichnet, dass** sie 50 - 90 phr der Kieselsäure enthält.

8. Fahrzeugluftreifen mit einem Laufstreifen, der zumindest zum Teil aus einer mit Schwefel vulkanisierten Kautschukmischung nach einem der Ansprüche 1 bis 7 besteht.

## Claims

1. Sulfur-crosslinkable rubber mixture without aromatic process oils, in particular for the tread of vehicle tires, containing:
- at least one diene rubber,
- 5 - 50 phr (parts by weight, based on 100 parts by weight of the total rubbers in the mixture) of at least one carbon black having an iodine adsorption number of 100 - 180 g/kg and a DBP number of 100 - 150 cm³/100g,
- 5 - 80 phr of at least one mineral oil plasticizer which has a content of polycyclic aromatic compounds, determined with the DMSO extract by the IP 346 method, of less than 3 % by weight, based on the total weight of the mineral oil plasticizer,
- 20 - 100 phr of at least one silica having a nitrogen surface area of 180 - 210 m²/g and a CTAB surface area of 180 - 210 m²/g and
- at least one silane coupling agent.

2. Rubber mixture according to Claim 1, **characterized in that** it contains 30 - 90 phr of at least one solution-polymerized styrene-butadiene copolymer having a proportion of vinyl of more than 35% by weight and 10 - 70 phr of at least one further diene rubber.

3. Rubber mixture according to Claim 2, **characterized in that** the solution-polymerized styrene-butadiene copolymer has a vinyl fraction of 35 - 80% by weight and a styrene fraction of 15 - 40% by weight.

4. Rubber mixture according to Claim 2 or 3,
**characterized in that** the further diene rubber is selected from the group consisting of natural rubber, synthetic polyisoprene, polybutadiene and styrene-butadiene copolymers.

5. Rubber mixture according to at least one of the preceding claims, **characterized in that** the carbon black has an iodine adsorption number of 110 - 130 g/kg and a DBP number of 120 - 140 cm³/100 g.

6. Rubber mixture according to at least one of the preceding claims, **characterized in that** it contains 10 - 50 phr of the mineral oil plasticizer.

7. Rubber mixture according to at least one of the preceding claims, **characterized in that** it contains 50 - 90 phr of the silica.

8. Pneumatic vehicle tire having a tread which at least partly comprises a sulfur-vulcanized rubber mixture according to any of Claims 1 to 7.

## Revendications

1. Composition de caoutchouc réticulable au soufre, sans huiles aromatiques de processus, en particulier pour la bande de roulement de pneumatiques à air pour véhicules, contenant
- au moins un caoutchouc diène,
- 5 - 50 phr (parties en poids par rapport à 100 parties en poids de l'ensemble des caoutchoucs dans la composition) d'au moins un noir de carbone ayant un indice d'adsorption d'iode de 100 - 180 g/kg et un indice DBP (absorption de phtalate de dibutyle) de 100 - 150 cm³/100 g,
- 5 - 80 phr d'au moins un plastifiant de type huile minérale, qui présente une teneur en composés aromatiques polycycliques, déterminé avec l'extrait dans du DMSO selon la méthode IP 346, de moins de 3 % en poids, par rapport au poids total du plastifiant de type huile minérale,
- 20 - 100 phr d'au moins un acide silicique avec un surface-azote de 180 - 210 m²/g et une surface CTAB de 180 - 210 m²/g et
- au moins un réactif de couplage silane.

2. Composition de caoutchouc selon la revendication 1, **caractérisée en ce qu'**elle contient 30 - 90 phr d'au moins un copolymère styrène-butadiène polymérisé en solution avec une teneur en vinyle de plus de 35 % en poids et 10 -70 phr d'au moins un autre caoutchouc diène.

3. Composition de caoutchouc selon la revendication 2, **caractérisée en ce que** le copolymère styrène-butadiène polymérisé en solution présente une teneur en vinyle de 35 - 80 % en poids et une teneur en styrène de 15 - 40 % en poids.

4. Composition de caoutchouc selon la revendication 2 ou 3, **caractérisée en ce que** l'autre caoutchouc diène est choisi dans le groupe consistant en le caoutchouc naturel, le polyisoprène synthétique, le polybutadiène et des copolymères styrène-butadiène.

5. Composition de caoutchouc selon au moins l'une des revendications précédentes, **caractérisée en ce que** le noir de carbone présente un indice d'adsorption d'iode de 110 - 130 g/kg et un indice DBP de 120 - 140 cm³/100 g.

6. Composition de caoutchouc selon au moins l'une des revendications précédentes, **caractérisée en ce qu'**elle contient 10 - 50 phr du plastifiant de type huile minérale.

7. Composition de caoutchouc selon au moins l'une des revendications précédentes, **caractérisée en ce qu'**elle contient 50 - 90 phr de l'acide silicique.

8. Pneumatique à air pour véhicule comportant une bande de roulement dont au moins une partie consiste en une composition de caoutchouc vulcanisée au soufre selon l'une quelconque des revendications 1 à 7.
